# EUROPÄISCHE PATENTSCHRIFT

(11) **EP 2 702 290 B1**
(45) Veröffentlichungstag und Bekanntmachung des Hinweises auf die Patenterteilung: **14.06.2017**
(21) Anmeldenummer: 12727253.2
(22) Anmeldetag: 10.04.2012
(51) Int. Cl.: F16D 25/08, F16D 25/12

(54) **GEBERZYLINDER UND VERFAHREN ZUR MONTAGE EINES GEBERZYLINDERS**
MASTER CYLINDER AND METHOD FOR MOUNTING A MASTER CYLINDER
MAÎTRE-CYLINDRE ET PROCÉDÉ DE MONTAGE D'UN MAÎTRE-CYLINDRE

(30) Priorität: 27.04.2011 DE 102011018828
(43) Veröffentlichungstag der Anmeldung: 05.03.2014
(73) Patentinhaber: Schaeffler Technologies AG & Co. KG, 91074 Herzogenaurach (DE)
(72) Erfinder: WAGNER, Philippe, 45000 Orléans (FR); WEY, Yannick, F-67800 Hoenheim (FR)
(86) Internationale Anmeldenummer: PCT/DE2012/000375
(87) Internationale Veröffentlichungsnummer: WO 2012/146229

(56) Entgegenhaltungen:
- EP-A1- 0 894 687
- EP-A2- 2 053 252
- GB-A- 2 035 512

## Beschreibung

Gegenstand der vorliegenden Erfindung ist ein Geberzylinder, welcher insbesondere in hydraulischen Betätigungsvorrichtungen, insbesondere eines brennkraftmaschinengetriebenen Automobils eingesetzt werden kann. Weiterhin wird ein Verfahren zur Montage eines Geberzylinders offenbart.

Geberzylinder werden zur hydraulischen Übertragung von Kräften eingesetzt. Diese beruht auf der Übertragung von Kraft durch ein Hydraulikmedium wie beispielsweise ein Mineralöl von einem Geberzylinder zu einem Nehmerzylinder. Bei der Betätigungsvorrichtung einer Kupplung eines brennkraftmaschinengetriebenen Automobils ist üblicherweise der Geberzylinder mit dem Kupplungspedal verbunden, so dass eine Betätigung des Kupplungspedals zu einer Bewegung des Kolbens im Geberzylinder führt, die über das Hydraulikmedium an den Nehmerzylinder übertragen wird und zu einem Betätigen der Kupplung, das heißt zu einem Einrücken oder Ausrücken der Kupplung führt.

Geberzylinder umfassen einen Zylinder mit einem Kolben in einem Gehäuse, wobei der Kolben zur Betätigung üblicherweise mit einer Kolbenstange verbunden ist. Aus dem Stand der Technik ist es bekannt, die Kolbenstange des Kolbens des Geberzylinders durch eine Halteklammer im Gehäuse des Zylinders zu fixieren, um so zu verhindern, dass Kolbenstange, Kolben und weitere Teile aus dem Inneren des Geberzylinders aus diesem herausrutschen. Diese Halteklammer wird zumeist über eine Clipverbindung mit dem Gehäuse verbunden. Die Druckschrift EP 2 053 252 A2 beschreibt einen Geberzylinder mit einer solchen Halteklammer, die als Anschlag dient und mit dem Geberzylindergehäuse verbunden ist.

Die Druckschrift EP 0 894 687 A1 zeigt einen Geberzylinder mit einem Anschlag, der mittels eines Bajonettverschlusses mit dem Geberzylinder verbunden wird. Diese bekannten Lösungen aus dem Stand der Technik haben den Nachteil, dass dann, wenn eine gewisse Festigkeit des Geberzylinders zu gewährleisten ist, sowohl die Halteklammer als auch der Teil des Gehäuses, an dem diese befestigt wird, eine gewisse Wandstärke aufweisen müssen. In axialer Richtung führt dies zu einem relativ hohen Bedarf an Bauraum. Die notwendige auszubildende Clipverbindung führt dazu, dass entsprechende Haltenasen oder ähnliches am Gehäuse ausgebildet werden müssen, wodurch das Werkzeug zur Herstellung des Gehäuses an Komplexität gewinnt. Insbesondere kommt es zu einer unerwünschten Gratbildung, da dieser Grat bei der Montage der Halteklammer regelmäßig abgerissen oder abgeschert wird, was zu unerwünschten Verschmutzungen und gegebenenfalls zu Qualitätsproblemen führen kann.

Hiervon ausgehend liegt der vorliegenden Erfindung die Aufgabe zugrunde, einen Geberzylinder anzugeben, mit dem die aus dem Stand der Technik bekannten Nachteile zumindest teilweise überwunden werden können. Insbesondere soll ein Geberzylinder angegeben werden, bei dem eine Fixierung der Kolbenstange auf einfache und sichere Art möglich ist. Weiterhin soll ein entsprechendes Verfahren zur Montage eines Geberzylinders angegeben werden.

Diese Aufgaben werden gelöst mit den Merkmalen der unabhängigen Ansprüche. Die jeweiligen abhängigen Ansprüche sind auf vorteilhafte Weiterbildungen gerichtet.

Gegenstand der Erfindung ist ein Geberzylinder, der insbesondere für ein hydraulisches Betätigungssystem geeignet ist und zwar insbesondere für ein hydraulisches Betätigungssystem einer Reibungskupplung, bevorzugt einer Reibungskupplung in einem brennkraftmaschinenbetriebenen Fahrzeug. Der Geberzylinder umfasst einen Zylinder mit einem Kolben mit Kolbenstange, der in einem Gehäuse in Richtung einer Bewegungsachse bewegbar ist. Weiterhin ist eine Anschlagkappe ausgebildet, die eine Öffnung aufweist, durch die die Kolbenstange bewegbar ist. Die Anschlagkappe ist außenseitig mit dem Gehäuse verbunden und begrenzt die Beweglichkeit der Kolbenstange in eine Richtung der Bewegungsachse.

Die Bewegungsachse entspricht der Längsachse des Zylinders und auch des Gehäuses. Es handelt sich hierbei um die Richtung, in die der Kolben im Gehäuse hin und her bewegt werden kann. Unter einer Anschlagkappe wird ein Element verstanden, welches ein Ende des Gehäuses außen umgreift. Die Anschlagkappe weist einen geschlossenen Umfang auf, der die Öffnung begrenzt. Bevorzugt weist die Anschlagkappe spezielle Befestigungselemente auf, mit denen sie am äußeren Umfang des Gehäuses verbunden wird. Die Anschlagkappe wirkt also als Anschlag, der die Beweglichkeit der Kolbenstange in eine Richtung der Bewegungsachse begrenzt.

Die Verbindung zwischen Anschlagkappe und Gehäuse wird bevorzugt stoffschlüssig, kraftschlüssig und/oder formschlüssig ausgebildet. Insbesondere ist es bevorzugt, die Haltekappe mit dem Gehäuse zu verschweißen oder zu verkleben und/oder eine kraft- und/oder formschlüssige Verbindung wie beispielsweise eine Bajonettverbindung auszubilden. In der erfindungsgemäßen Lösung ist die Anschlagsfunktion von der Funktion der Verbindung mit dem Gehäuse räumlich getrennt. So ist es möglich, einen Anschlag für die Kolbenstange zu generieren, der deutlich weniger axialen Bauraum benötigt als die aus dem Stand der Technik bekannte Lösung, da die Festigkeit der Verbindung nicht innerhalb des Gehäuses sondern außerhalb des Gehäuses und damit bauraumneutral gewährleistet werden kann. Dadurch ist es möglich, relativ klein bauende Geberzylinder auszubilden und gleichzeitig die Kosten bei der Herstellung des Geberzylinders zu reduzieren, da neben einem deutlich einfacheren Werkzeug zur Herstellung des Gehäuses auch eine deutlich einfachere Montage als mit einer aus dem Stand der Technik bekannten Halteklammer möglich ist. Dadurch, dass die Kolbenstange derart ausgebildet ist, dass sie durch die Öffnung der Anschlagkappe in das Gehäuse einführbar ist, kann das Gehäuse mit Anschlagkappe vormontiert und die Kolbenstange erst nachträglich eingeführt werden, was den Montageaufwand ebenfalls erheblich reduziert.

Gemäß einer vorteilhaften Ausgestaltung des Geberzylinders ist die Öffnung so ausgebildet, dass sie zumindest in einem Teilbereich kleiner ist als der lichte Querschnitt des Gehäuses.

Unter dem lichten Querschnitt des Gehäuses wird hierbei der Querschnitt zwischen den Hüllflächen, also den Außenflächen des Gehäuses verstanden. Der lichte Querschnitt des Gehäuses entspricht im Wesentlichen dem Querschnitt des Kolbens in diesem Bereich, da dieser durch entsprechende Dichtmittel dichtend in dem Gehäuse geführt wird. Die Ausbildung der Öffnung so, dass sie zumindest in einem Teilbereich kleiner ist als der lichte Querschnitt des Gehäuses bedeutet, dass die Öffnung insgesamt kleiner ist als der lichte Querschnitt des Gehäuses. So kann in einfacher Art und Weise die Anschlagfunktion der Anschlagkappe ermöglicht werden, indem die Öffnung so gestaltet wird, dass die Kolbenstange zumindest bereichsweise durch diese durchtreten kann nicht aber der Kolben.

Gemäß einer weiteren Ausgestaltung des Geberzylinders ist die Öffnung so ausgebildet, dass sie mindestens einen Durchmesser aufweist, der dem lichten Durchmesser des Gehäuses entspricht.

Hierunter wird verstanden, dass es mindestens eine Linie gibt, die zwei gegenüberliegende Punkte des Gehäuses beziehungsweise dessen Innenflächen durch den Mittelpunkt oder Schwerpunkt des Gehäusequerschnitts verbindet, der in seiner Länge dem lichten Durchmesser des Gehäuses entspricht. Folglich weist die Anschlagkappe eine Öffnung auf, die zumindest in einem Teilbereich, beispielsweise in einem Winkelbereich oder einem mittleren Bereich den lichten Querschnitt des Gehäuses vollständig öffnet. So ist es möglich, die Kolbenstange so zu gestalten, dass sie durch diese Öffnung in das Gehäuse eingeführt werden kann, jedoch durch eine Drehung um die Bewegungsachse gegen ein Verlieren durch die Öffnung verriegelt werden kann.

Gemäß einer weiteren Ausgestaltung des Geberzylinders ist die Anschlagkappe so ausgebildet, dass sie als Öffnung zumindest einen ersten Teilbereich aufweist, in dem der lichte Querschnitt des Gehäuses vollständig offen ist und mindestens einen zweiten Teilbereich, in dem der lichte Querschnitt des Gehäuses zumindest teilweise verdeckt ist.

Hierunter wird verstanden, dass die Anschlagkappe so ausgestaltet ist, dass die in ihr befindliche Öffnung einen Teilbereich des lichten Querschnitts des Gehäuses öffnet und einen weiteren verschließt. So ist es beispielsweise möglich, das die Öffnung einen zentralen durchgehend offenen Bereich aufweist, der den Mittelpunkt oder Schwerpunkt des lichten Querschnitts des Gehäuses enthält und davon ab liegende äußere Bereiche, die geschlossen ausgebildet sind. Weiterhin ist es beispielsweise möglich, dass bei einem kreisförmigen lichten Querschnitt des Gehäuses die Öffnung beispielsweise einen Halbkreis oder einen Dreiviertelkreis offenlässt und den Rest verschließt. So kann durch eine entsprechende Ausgestaltung der Kolbenstange erreicht werden, dass die Kolbenstange durch die montierte Anschlagkappe hindurch in das Gehäuse eingeführt werden kann und dann durch eine Rotation der Kolbenstange bevorzugt um eine Achse, die den Schwerpunkt oder Mittelpunkt des lichten Querschnitts des Gehäuses umfasst, verriegelt werden kann, so dass die geschlossenen Bereiche der Anschlagkappe den Anschlagbereich für die Kolbenstange bilden.

Gemäß einer weiteren Ausgestaltung ist die Kolbenstange so ausgebildet, dass sie nach Einführung durch die Öffnung durch eine Rotation um eine Längsachse der Kolbenstange verriegelbar ist.

Hierdurch kann bei entsprechender Ausbildung der Kolbenstange erreicht werden, dass die Montage statt einer aufwendigen Montage der entsprechenden Halteklammer sich darauf beschränkt, die Kolbenstange durch eine entsprechende Ausrichtung durch eine Rotation durch die Längsachse so auszurichten, dass die Kontur der Kolbenstange mit der Kontur der Öffnung übereinstimmt und dann diese durch die Öffnung in das Gehäuse einzuführen und dann durch eine Rotation um die Längsachse der Kolbenstange zu verriegeln.

Bevorzugt ist hierbei die Kolbenstange und/oder das Gehäuse so ausgebildet, dass es zu einer definierte Endlage nach der Rotation um die Längsachse der Kolbenstange kommt, dass also beim Montieren einfach feststellbar ist, dass die korrekte Endlage erreicht wurde.

Gemäß einer weiteren Ausgestaltung des Geberzylinders weist die Anschlagkappe einen ersten Befestigungsbereich auf, der mit einem zweiten Befestigungsbereich des Gehäuses, der umfangsseitig außen am Gehäuse ausgebildet ist, verbunden ist.

Der erste Befestigungsbereich greift also um das Gehäuse herum. Bevorzugt sind erster Befestigungsbereich und zweiter Befestigungsbereich zueinander korrespondierend ausgebildet. Die Verbindung kann insbesondere stoffschlüssig, bevorzugt durch Schweißen und/oder Kleben und/oder kraft- und/oder formschlüssig erfolgen, bevorzugt durch einen Bajonettverschluss oder eine Clipverbindung.

Gemäß einem weiteren Aspekt wird ein Verfahren zur Montage eines Geberzylinders, insbesondere für ein hydraulisches Betätigungssystem einer Reibungskupplung, insbesondere in einem brennkraftmaschinenbetriebenen Fahrzeug beschrieben, wobei der Geberzylinder einen Zylinder mit einem Kolben mit Kolbenstange umfasst, der in einem Gehäuse in Richtung einer Bewegungsachse bewegbar ist. Das Verfahren umfasst die folgenden Schritte:
- der Zylinder mit Gehäuse und Kolben wird mit einer Anschlagkappe zumindest mit einem ersten Befestigungsbereich mit einem zweiten Befestigungsbereich am äußeren Umfang des Gehäuses verbunden, so dass die Anschlagkappe das Gehäuse an einem Ende in Richtung der Bewegungsachse begrenzt, wobei die Anschlagkappe eine Öffnung aufweist, die den lichten Querschnitt des Gehäuses teilweise freigibt,
- eine Kolbenstange wird mit einem Eintrittsende durch die Öffnung in der Anschlagskappe in das Gehäuse geführt und durch eine Rotation relativ zur Bewegungsachse verriegelt.

Das erfindungsgemäße Verfahren kann insbesondere zur Montage eines erfindungsgemäßen Geberzylinders eingesetzt werden.

Gemäß einer vorteilhaften Ausgestaltung des Verfahrens wird die Verbindung zwischen erstem Befestigungsbereich und zweitem Befestigungsbereich stoffschlüssig ausgebildet.

Bevorzugt ist eine Ausbildung durch eine Schweißverbindung oder eine Klebeverbindung.

Gemäß einer weiteren Ausgestaltung des Verfahrens wird die Verbindung zwischen erstem Befestigungsbereich und dem zweiten Befestigungsbereich kraft- und/oder formschlüssig ausgebildet. Besonders bevorzugt ist die Ausbildung nach Art eines Bajonettverschlusses oder eine Klippverbindung.

Die für den erfindungsgemäßen Geberzylinder offenbarten Details und Vorteile lassen sich auf das Verfahren anwenden und übertragen und umgekehrt. Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Im Folgenden wird die Erfindung anhand der beigefügten Figuren näher erläutert, wobei die Erfindung nicht auf die dort gezeigten Details und Ausführungsbeispiele beschränkt ist. Es zeigen schematisch:
- Fig. 1:: einen Längsschnitt durch einen als bekannt angenommenen Geberzylinder;
- Fig. 2:: eine Halteklammer zur Fixierung in einer Kolbenstange in einem als bekannt angenommenen Geberzylinder,
- Fig. 3:: einen Querschnitt eines als bekannt angenommenen Geberzylinders,
- Fig. 4:: eine perspektivische Ansicht eines Geberzylinders,
- Fig. 5:: einen Längsschnitt durch einen Geberzylinder;
- Fig. 6 - 7:: perspektivische Ansichten der Montage eines Geberzylinders;
- Fig. 8:: einen Querschnitt eines Gehäuses eines Geberzylinders mit Kolbenstange;
- Fig. 9: eine Ansicht einer Anschlagkappe; und
- Fig. 10: eine weitere Ansicht einer Anschlagkappe.

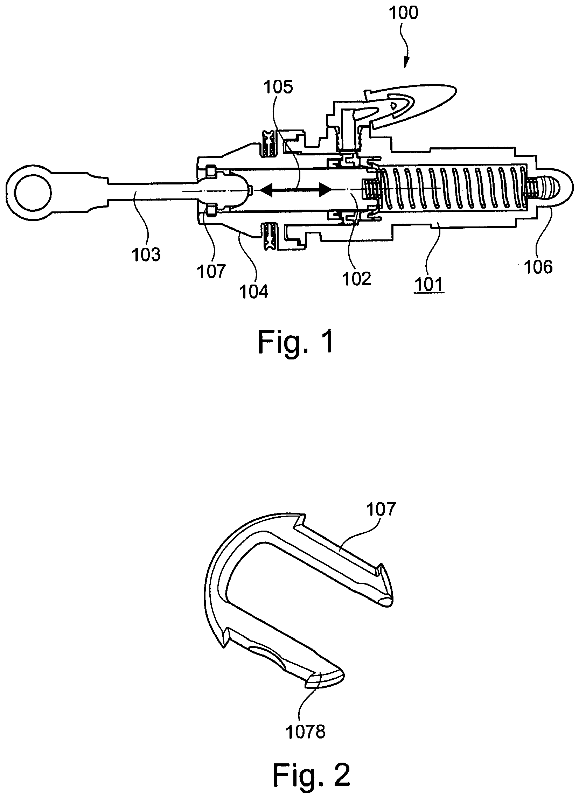

Fig. 1 zeigt schematisch im Längsschnitt einen als bekannt angenommenen Geberzylinder 100. Dieser weist einen Zylinder 101, einen Kolben 102 und eine mit diesem verbundene Kolbenstange 103 auf. Der Kolben 102 ist einem Gehäuse 104 in Richtung einer Bewegungsachse 105 beweglich. Das Gehäuse 104 ist im vorliegenden Beispiel mehrteilig aufgebaut. Im Betrieb wird die Kolbenstange 103, der Kolben 102 im Gehäuse 104 bewegt und dadurch eine Hydraulikflüssigkeit über eine Hydraulikleitung 106 zu einem hier nicht gezeigten Nehmerzylinder transferiert. Hierdurch kann eine Kraft vom Geberzylinder 100 zum Nehmerzylinder übertragen werden. Der Geberzylinder 100 ist aus einem Kunststoff ausgebildet.

Die Kolbenstange 103 wird über eine Halteklammer 107 im Gehäuse 104 fixiert. Fig. 2 zeigt eine perspektivische Ansicht dieser Halteklammer 107. Diese weist Rastnasen 108 auf, die mit entsprechenden Rastausnehmungen im Gehäuse 104 zusammenwirken und so eine Rastverbindung oder auch eine Clipverbindung bilden können.

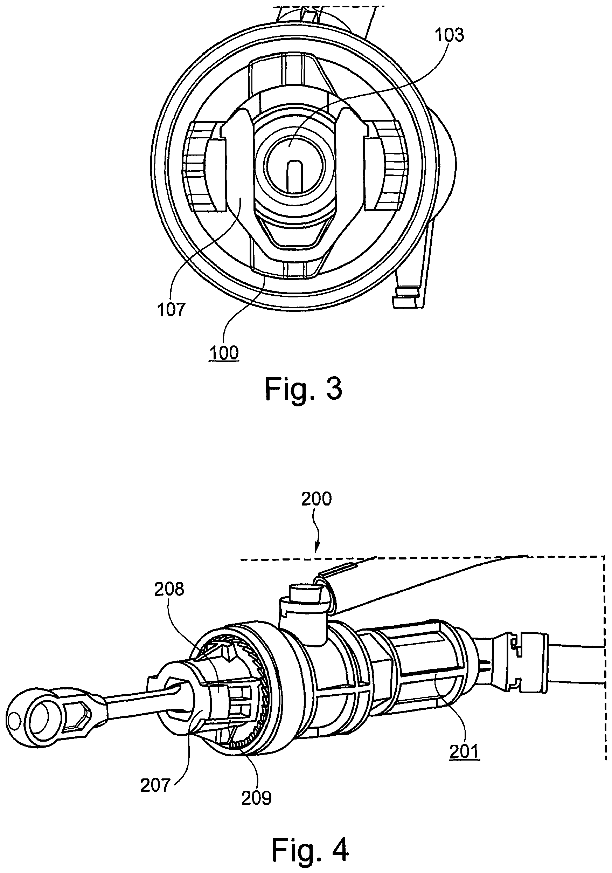

Fig. 3 zeigt schematisch einen Querschnitt durch einen entsprechenden Geberzylinder 100. Die Halteklammer 107 fixiert die Kolbenstange 103 im Gehäuse 104. Neben der Wandstärke der Halteklammer muss aus Festigkeitsgründen nach außen gewandt eine Wandstärke des Gehäuses oder auch des Schweißrings, mit dem die Halteklammer verbunden wird, eine gewisse Wandstärke vorgesehen werden, so dass die durch die Halteklammer 107 bedingte notwendige Verlängerung des Geberzylinders 100 größer ist als lediglich die Dicke der Halteklammer in Richtung der Bewegungsachse 105.

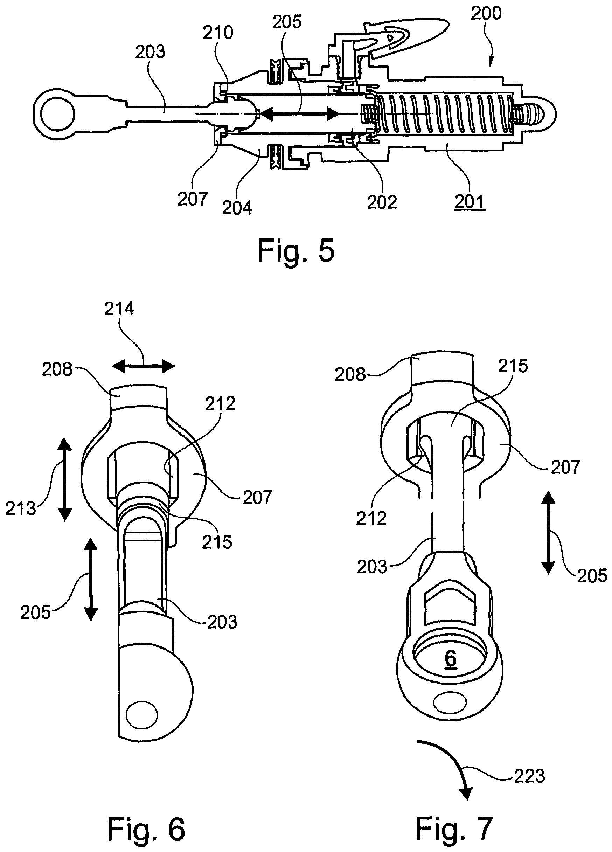

Fig. 4 zeigt ein alternatives Konzept eines Geberzylinders 200. Dieser weist einen Zylinder 201 auf. Wie insbesondere aus Fig. 5 zu entnehmen ist, umfasst der Zylinder 201 einen Kolben 202 mit Kolbenstange 203, der an einem Gehäuse 204, welches hier mehrteilig ausgeführt ist, in Richtung einer Bewegungsachse 205 beweglich ist. Der Kolben 202 weist übliche Dichtmittel 206 zur Abdichtung des Kolbens 202 gegen das Gehäuse 204 auf. Der Geberzylinder 200 weist ferner eine Anschlagkappe 207 auf. Die Anschlagkappe 207 weist einen ersten Befestigungsbereich 208 auf. Das Gehäuse 204 weist umfangsseitig außen einen zweiten Befestigungsbereich 209 auf. Erster Befestigungsbereich 208 und zweiter Befestigungsbereich 209 sind zueinander korrespondierend ausgebildet, im vorliegenden Ausführungsbeispiel bilden diese gemeinsam einen Bajonettverschluss, so dass der erste Befestigungsbereich 208 und damit die Anschlagkappe 207 über eine Bajonettverbindung mit dem Gehäuse 204 verbunden ist. Alternativ oder zusätzlich kann beispielsweise eine Schweißverbindung zwischen erstem Befestigungsbereich 208 und zweiten Befestigungsbereich 209 ausgebildet werden. So kann die Anschlagkappe 207 auf einfache Art und Weise mit dem Gehäuse 204 verbunden werden. Die Anschlagkappe 207 weist einen Anschlagsbereich 210 auf, der als Anschlag für die Kolbenstange 203 dient. Hierdurch wird die Beweglichkeit der Kolbenstange 203 in eine Richtung der Bewegungsachse 205, nämlich in die Auszugsrichtung 211 begrenzt.

Fig. 6 und Fig. 7 zeigen schematisch die Montage der Kolbenstange 203. Die Kolbenstange 203 wird dazu durch eine Öffnung 212 der Anschlagkappe 207 geführt. Hierzu ist die Öffnung 212 so gestaltet, dass ein erster Durchmesser 213 der lichten Weite des Gehäuses 204 in dieser Richtung entspricht, während ein zweiter Durchmesser 214, der bevorzugt senkrecht zum ersten Durchmesser 213 anliegt, kleiner ist als der erste Durchmesser 213 und kleiner als die lichte Weite des Gehäuses 204 in dieser Richtung. Dadurch ist es möglich, die Kolbenstange und insbesondere einen Kopf 215 der Kolbenstange 203 asymmetrisch auszubilden. Dieser Kopf 215 hat im vorliegenden Beispiel einen im Wesentlichen rechteckigen Querschnitt mit abgerundeten Längsseiten, der im Wesentlichen dem Querschnitt der Öffnung 212 der Anschlagkappe 207 entspricht. Hierdurch kann in einer ersten Ausrichtung die Kolbenstange 203 mit dem Kopf 215 durch die Öffnung 212 geführt werden und dann durch eine Rotation 223 um 90° um die Bewegungsachse 205 hinter der Anschlagkappe 207 und damit im Gehäuse 204 verriegelt werden. So kann die Kolbenstange 203 nicht mehr durch die Öffnung 212 treten, ohne vorher eine Rotationsbewegung vorzunehmen.

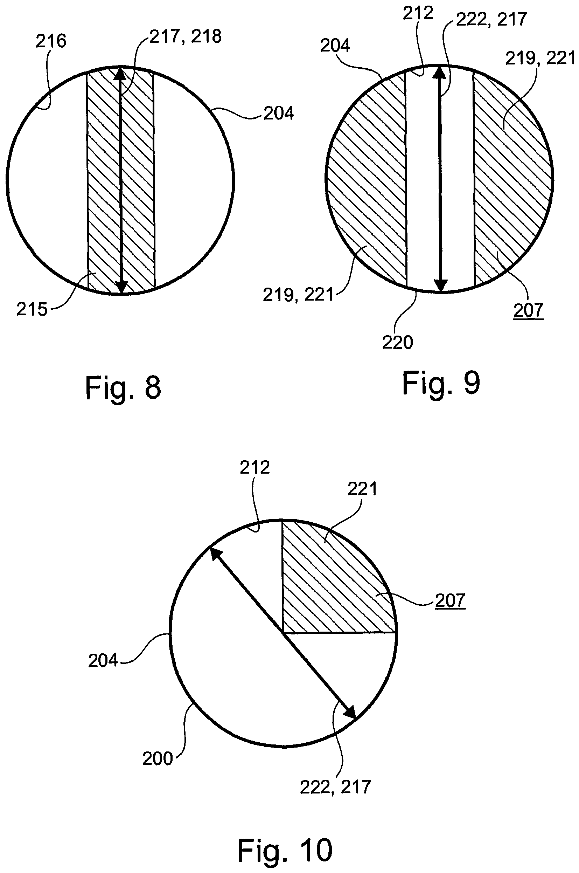

Fig. 8 zeigt schematisch einen lichten Querschnitt 216 des Gehäuses 204. Der lichte Querschnitt 216 ist der innere Bereich, der durch die inneren Wände des Gehäuses 204 begrenzt wird. Im vorliegenden Beispiel ist dieser lichte Querschnitt 216 kreisförmig und weist einen durchgängig einheitlichen lichten Durchmesser 217 auf. Der entsprechende Bereich der Kolbenstange 203, insbesondere der Kopf 215 der Kolbenstange 203, ist dabei so ausgebildet, dass sein größter Durchmesser 218 dem lichten Durchmesser 217 des Gehäuses 204 entspricht. Die Öffnung 212 des Gehäuses 204 ist dabei bevorzugt so ausgestaltet, dass sie zumindest in einem Teilbereich kleiner ist als der lichte Querschnitt 216 des Gehäuses 204.

Fig. 9 zeigt ein entsprechendes Beispiel. Die Anschlagkappe 207 weist Öffnung 212 auf. Die Öffnung 212 gibt dabei nicht den vollen lichten Querschnitt 216 des Gehäuses 204 frei, vielmehr sind Teilbereich 219 ausgebildet, die verdeckt sind. Fig. 10 zeigt eine weitere alternative Möglichkeit, bei der die Öffnung 212 einen Dreiviertelkreis des lichten Durchmessers 216 umfasst. Sowohl in dem Beispiel in Fig. 9 als auch im Beispiel in Fig. 10 sind erste Teilbereiche 220 ausgebildet, in dem der lichte Querschnitt 216 des Gehäuses 204 vollständig offen ist und zweite Teilbereiche 221, in denen der lichte Querschnitt 216 des Gehäuses 204 verdeckt ist. In beiden Fällen gibt es mindestens einen Durchmesser 222 der Öffnung 212, der dem lichten Durchmesser 217 des Gehäuses 204 entspricht.

Der hier diskutierte Geberzylinder 200 ermöglicht in vorteilhafte Weise eine einfache Montage der Kolbenstange 203 im Gehäuse 204 bei gleichzeitiger Bildung eines entsprechenden Anschlagsbereichs 201. Im Vergleich zu als bekannt angenommenen Lösungen kann der Geberzylinder 200 in Richtung der Bewegungsachse 205 kürzer bauen, da auf den Einsatz einer Halteklammer 107 und eine entsprechende Verlängerung des Gehäuses 204 aus Festigkeitsgründen verzichtet werden kann.

### Bezugszeichenliste

- 100: Geberzylinder
- 101: Zylinder
- 102: Kolben
- 103: Kolbenstange
- 104: Gehäuse
- 105: Bewegungsachse
- 106: Hydraulikleitung
- 107: Halteklammer
- 108: Rastnase

- 200: Geberzylinder
- 201: Zylinder
- 202: Kolben
- 203: Kolbenstange
- 204: Gehäuse
- 205: Bewegungsachse
- 206: Dichtmittel
- 207: Anschlagkappe
- 208: erster Befestigungsbereich
- 209: zweiter Befestigungsbereich
- 210: Anschlagsbereich
- 211: Auszugsrichtung
- 212: Öffnung
- 213: erster Durchmesser
- 214: zweiter Durchmesser
- 215: Kopf
- 216: lichter Querschnitt
- 217: lichter Durchmesser
- 218: größter Durchmesser
- 219: Teilbereich
- 220: erster Teilbereich
- 221: zweiter Teilbereich
- 222: Durchmesser
- 223: Rotation

## Patentansprüche

1. Geberzylinder (200), insbesondere für ein hydraulisches Betätigungssystem einer Reibungskupplung, insbesondere in einem brennkraftmaschinenbetriebenen Fahrzeug, umfassend einen Zylinder (201) mit einem Kolben (202) mit Kolbenstange (203), der in einem Gehäuse (204) in Richtung einer Bewegungsachse (205) bewegbar ist, wobei eine Anschlagkappe (207) ausgebildet ist, die eine Öffnung (212) aufweist, durch die die Kolbenstange (203) bewegbar ist, wobei die Anschlagkappe (207) am äußeren Umfang des Gehäuses mit dem Gehäuse (204) verbunden ist und die Beweglichkeit der Kolbenstange (203) in eine Richtung der Bewegungsachse (205) begrenzt, **gekennzeichnet dadurch, dass** die Kolbenstange (203) so ausgebildet ist, dass sie durch die Öffnung (212) in das Gehäuse (204) einführbar ist.

2. Geberzylinder (200) nach Anspruch 1, bei dem die Öffnung (212) so ausgebildet ist, dass sie zumindest in einem Teilbereich (219) kleiner ist als der lichte Querschnitt (216) des Gehäuses (204).

3. Geberzylinder (200) nach einem der vorhergehenden Ansprüche, bei dem die Öffnung (212) so ausgebildet ist, dass sie mindestens einen Durchmesser (222) aufweist, der dem lichten Durchmesser (217) des Gehäuses (204) entspricht.

4. Geberzylinder (200) nach einem der vorhergehenden Ansprüche, bei dem die Anschlagkappe (207) so ausgebildet ist, dass sie als Öffnung (212) zumindest einen ersten Teilbereich (220) aufweist, in dem der lichte Querschnitt (216) des Gehäuses (204) vollständig offen ist und mindestens einen zweiten Teilbereich (221), in dem der lichte Querschnitt (216) des Gehäuses (204) zumindest teilweise verdeckt ist.

5. Geberzylinder (200) nach einem der vorhergehenden Ansprüche, bei dem die Kolbenstange (203) so ausgebildet ist, dass sie nach Einführung durch die Öffnung (212) durch eine Rotation (223) um eine Längsachse der Kolbenstange (203) verriegelbar ist.

6. Geberzylinder (200) nach einem der vorhergehenden Ansprüche, bei dem die Anschlagkappe (207) einen ersten Befestigungsbereich (208) aufweist, der mit einem zweiten Befestigungsbereich (209) des Gehäuses (204), der umfangsseitig außen am Gehäuse (204) ausgebildet ist, verbunden ist.

7. Verfahren zur Montage eines Geberzylinders, insbesondere für ein hydraulisches Betätigungssystem einer Reibungskupplung, insbesondere in einem brennkraftmaschinenbetriebenen Fahrzeug, der einen Zylinder mit einem Kolben mit Kolbenstange, der in einem Gehäuse in Richtung einer Bewegungsachse bewegbar ist, umfasst,
umfassend die folgenden Schritte:
- der Zylinder mit Gehäuse und Kolben wird mit einer Anschlagkappe zumindest mit einem ersten Befestigungsbereich mit einem zweiten Befestigungsbereich am äußeren Umfang des Gehäuses verbunden, so dass die Anschlagkappe das Gehäuse an einem Ende in Richtung der Bewegungsachse begrenzt, wobei die Anschlagkappe eine Öffnung aufweist, die den lichten Querschnitt des Gehäuses teilweise freigibt,
- eine Kolbenstange wird mit einem Eintrittsende durch die Öffnung in der Anschlagskappe in das Gehäuse geführt und durch eine Rotation relativ zur Bewegungsachse verriegelt.

8. Verfahren nach Anspruch 7, bei dem die Verbindung zwischen erstem Befestigungsbereich und zweitem Befestigungsbereich stoffschlüssig ausgebildet wird.

9. Verfahren nach Anspruch 7 oder 8, bei dem die Verbindung zwischen erstem Befestigungsbereich und dem zweiten Befestigungsbereich kraft- und/oder formschlüssig ausgebildet wird.

## Claims

1. Master cylinder (200), in particular for a hydraulic actuating system of a friction clutch, in particular in a vehicle which is operated by internal combustion engine, comprising a cylinder (201) with a piston (202) with a piston rod (203), which can be moved in a housing (204) in the direction of a movement axis (205), a stop cap (207) being configured which has an opening (212), through which the piston rod (203) can be moved, the stop cap (207) being connected to the housing (204) on the outer circumference of the housing and limiting the mobility of the piston rod (203) in a direction of the movement axis (205), **characterized in that** the piston rod (203) is configured in such a way that it can be introduced into the housing (204) through the opening (212).

2. Master cylinder (200) according to Claim 1, in which the opening (212) is configured in such a way that it is smaller at least in one part region (219) than the inside cross section (216) of the housing (204).

3. Master cylinder (200) according to either of the preceding claims, in which the opening (212) is configured in such a way that it at least has a diameter (222) which corresponds to the inside diameter (217) of the housing (204).

4. Master cylinder (200) according to one of the preceding claims, in which the stop cap (207) is configured in such a way that, as an opening (212), it has at least one first part region (220), in which the inside cross section (216) of the housing (204) is completely open, and at least one second part region (221), in which the inside cross section (216) of the housing (204) is covered at least partially.

5. Master cylinder (200) according to one of the preceding claims, in which the piston rod (203) is configured in such a way that, after being introduced through the opening (212), it can be locked by way of a rotation (223) about a longitudinal axis of the piston rod (203).

6. Master cylinder (200) according to one of the preceding claims, in which the stop cap (207) has a first fastening region (208) which is connected to a second fastening region (209) of the housing (204) which is configured circumferentially on the outside of the housing (204).

7. Method for assembling a master cylinder, in particular for a hydraulic actuating system of a friction clutch, in particular in a vehicle which is operated by internal combustion engine, which master cylinder comprises a cylinder with a piston with a piston rod, which can be moved in a housing in the direction of a movement axis, comprising the following steps:
- the cylinder with the housing and the piston is connected by way of a stop cap at least with a first fastening region to a second fastening region on the outer circumference of the housing, with the result that the stop cap limits the housing at one end in the direction of the movement axis, the stop cap having an opening which partially releases the inside cross section of the housing,
- a piston rod is guided with an inlet end through the opening in the stop cap into the housing and is locked by way of a rotation relative to the movement axis.

8. Method according to Claim 7, in which the connection between the first fastening region and the second fastening region is configured in an integrally joined manner.

9. Method according to Claim 7 or 8, in which the connection between the first fastening region and the second fastening region is configured in a non-positively and/or positively locking manner.

## Revendications

1. Maître-cylindre (200), en particulier pour un système de commande hydraulique d'un embrayage à friction, en particulier dans un véhicule entraîné par un moteur à combustion interne, comprenant un cylindre (201) avec un piston (202) avec une tige de piston (203) qui peut être déplacé dans un boîtier (204) dans la direction d'un axe de déplacement (205), une calotte de butée (207) étant réalisée, laquelle présente une ouverture (212) à travers laquelle peut être déplacée la tige de piston (203), la calotte de butée (207) étant connectée au boîtier (204) au niveau de la périphérie extérieure du boîtier et limitant la mobilité de la tige de piston (203) dans une direction de l'axe de déplacement (205), **caractérisé en ce que** la tige de piston (203) est réalisée de telle sorte qu'elle puisse être introduite à travers l'ouverture (212) dans le boîtier (204).

2. Maître-cylindre (200) selon la revendication 1, dans lequel l'ouverture (212) est réalisée de telle sorte qu'elle soit, au moins dans une région partielle (219), inférieure à la section transversale intérieure (216) du boîtier (204).

3. Maître-cylindre (200) selon l'une quelconque des revendications précédentes, dans lequel l'ouverture (212) est réalisée de telle sorte qu'elle présente au moins un diamètre (222) qui correspond au diamètre intérieur (217) du boîtier (204).

4. Maître-cylindre (200) selon l'une quelconque des revendications précédentes, dans lequel la calotte de butée (207) est réalisée de telle sorte qu'elle présente en tant qu'ouverture (212) au moins une première région partielle (220) dans laquelle la section transversale intérieure (216) du boîtier (204) est complètement ouverte et au moins une deuxième région partielle (221) dans laquelle la section transversale intérieure (216) du boîtier (204) est au moins en partie recouverte.

5. Maître-cylindre (200) selon l'une quelconque des revendications précédentes, dans lequel la tige de piston (203) est réalisée de telle sorte qu'après l'introduction à travers l'ouverture (212), elle puisse être verrouillée par une rotation (223) autour d'un axe longitudinal de la tige de piston (203).

6. Maître-cylindre (200) selon l'une quelconque des revendications précédentes, dans lequel la calotte de butée (207) présente une première région de fixation (208) qui est connectée à une deuxième région de fixation (209) du boîtier (204) qui est réalisée du côté de la périphérie à l'extérieur sur le boîtier (204).

7. Procédé de montage d'un maître-cylindre, en particulier pour un système de commande hydraulique d'un embrayage à friction, en particulier dans un véhicule entraîné par un moteur à combustion interne, qui comprend un cylindre avec un piston avec une tige de piston qui est déplaçable dans un boîtier dans la direction d'un axe de déplacement, comprenant les étapes suivantes :
- le cylindre, avec le boîtier et le piston, est connecté avec une calotte de butée au moins par une première région de fixation à une deuxième région de fixation au niveau de la périphérie extérieure du boîtier, de telle sorte que la calotte de butée limite le boîtier au niveau d'une extrémité dans la direction de l'axe de déplacement, la calotte de butée présentant une ouverture qui libère en partie la section transversale intérieure du boîtier,
- une tige de piston est guidée avec une extrémité d'entrée à travers l'ouverture dans la calotte de butée dans le boîtier et est verrouillée par une rotation par rapport à l'axe de déplacement.

8. Procédé selon la revendication 7, dans lequel la connexion entre la première région de fixation et la deuxième région de fixation est réalisée par liaison de matière.

9. Procédé selon la revendication 7 ou 8, dans lequel la connexion entre la première région de fixation et la deuxième région de fixation est réalisée par engagement par force et/ou par engagement par correspondance de formes.
